(19) 

**Europäisches Patentamt**
**European Patent Office**
**Office européen des brevets**

(11) **EP 4 016 028 A1**

(12) **EUROPEAN PATENT APPLICATION**

(43) Date of publication:
**22.06.2022 Bulletin 2022/25**

(21) Application number: **20214321.0**

(22) Date of filing: **15.12.2020**

(51) International Patent Classification (IPC):
**G01L 1/18** *(2006.01)*  **A61B 5/0536** *(2021.01)*
**B25J 13/08** *(2006.01)*  **G01L 1/20** *(2006.01)*
**G01L 5/22** *(2006.01)*

(52) Cooperative Patent Classification (CPC):
**G01L 1/205; B25J 13/087; G01L 1/18; G01L 5/22**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **CY Cergy Paris Université**
 **95000 Cergy (FR)**
• **École Nationale Supérieure de l'Électronique et
 de
 ses Applications
 95800 Cergy (FR)**
• **Centre National de la Recherche Scientifique
 75016 Paris (FR)**

• **Institut VEDECOM**
 **78000 Versailles (FR)**

(72) Inventors:
• **ABDELWAHED, Mehdi**
 **92700 Colombes (FR)**
• **PITTI, Alexandre**
 **92200 Neuilly-sur-Seine (FR)**
• **ROMAIN, Olivier**
 **91230 Montgeron (FR)**
• **BEN OUEZDOU, Fethi**
 **92330 Sceaux (FR)**

(74) Representative: **Demulsant, Xavier
 Dejade & Biset
 8 Avenue Jean Bart
 95000 Cergy (FR)**

(54) **TACTILE SENSOR TO ANALYSE A GIVEN MATERIAL, WITH ELECTRICAL IMPEDANCE
 TOMOGRAPHY (EIT)**

(57) Tactile sensor (1) to analyse a given material, with Electrical Impedance Tomography (EIT), comprising : one flexible film (2) of piezo-resistive material, intended to be in contact with the given material at one position on the film (2) and for one given pressure; a set of electrodes (3) in contact with the flexible film (2) along at its periphery; a microcontroller (4); an electronic unit (5) connected to the microcontroller (4), and which presents: electrical signals generating means, the electrical signals being sinusoidal alternating currents, so as to realize electrical impedance tomography (EIT) with multiple frequencies; multiplexing (6) and demultiplexing means (7) connected to electrodes (3), and configured to select: electrodes (3) for stimulation of the flexible film (2) with sinusoidal signals, and electrodes (3) for measurements the varying voltage in the film (2) at each frequency of the frequency band, the microcontroller (4) controlling the electrical signals generating means and the multiplexing (6) and demultiplexing means (7); storage and computing means connected to the electrodes (3), and which analyse by multifrequency analysis the material of the given object in contact with the flexible film (2).

Figure 2

EP 4 016 028 A1

**Description**

FIELD OF THE INVENTION

The invention relates to a tactile sensor for analysing the nature of a given material, with Electrical Impedance Tomography (EIT).

STATE OF THE ART

Combined with the visual and auditory senses and proprioception, artificial skins would provide additional sensory perception to robots and demultiply their capabilities.

Several techniques have been proposed for which most of them are using isolated unitary devices that cover specified surface and for which each is reacting to a small receptive field.

With respect to vision and audition modalities, tactile modality is now considered to be an important feature to achieve in robots, in order to enable them with intelligent and adaptive behaviours like grasping an object or touching people.

Current tactile devices give touch location and sometimes pressure information. Also, some of them can provide temperature, but very few of them can give two or three modalities at the same time.

Having robots capable of developing such tactile capabilities with the extra possibility of an adaptive body image would provide them with human-like features of self-calibration (by learning the physical extents of the body), of robustness and adaptability (when dealing with unexpected changes in tasks or in the environment).

These sensors can replace steering wheel controls, which present a single sensor capable of managing gestures as commands for the vehicle.

In home automation also, this sensor could be part of a more complex network with other sensors to allow object identification. Thus, placing an object on this sensor with a camera and a scale will allow through an elaborate process to define exactly the object, to better catalogue it in a connected refrigerator.

Several techniques are used to obtain tactile information, ranging from pressure sensors, optical sensors to acoustic sensors. Some of these techniques use an electrical signal to carry out touch information.

A promising method is the use of large conductive fabric sheets that reacts to electrical variations on its surface. Using inversion methods like Electrical Impedance Tomography (EIT), it is possible to reconstruct the spatial location on its surface. Compared to more classical methods, this technique is inexpensive in the design, allows to cover large surface portions, and allows to be nearest the design of the human-skin. However, this method does not provide a fast acquisition and does not use cheap reconstruction algorithms.

In older studies, Pugach, Pitti and their colleagues (Pugach et al., 2019 "Brain-Inspired Coding of Robot Body Schema Through Visuo-Motor Integration of Touched Events", Frontiers in Neurorobotics) could demonstrate the use of a flexible skin on a robotic arm and using EIT technology, this combination makes it possible to detect the position of the arm and to detect the contact.

The technical problem to solve is to find a tactile sensor which is able to identity the type of material with which the tactile sensor is in contact. This is an important parameter to create the adaptation of the machines when they meet different materials.

SUMMARY OF THE INVENTION

Here, the invention relates to a tactile sensor to analyse a given material, with Electrical Impedance Tomography (EIT), comprising:

- one flexible film of piezo-resistive material, intended to be in contact with the given material which deforms it and changes its electrical impedance and thus its conductivity distribution, at one position on the film and for one given pressure;
- a set of electrodes in contact with the flexible film along at its periphery, on the edges of the film or within;
- a microcontroller;
- an electronic unit connected to the microcontroller, and which presents:

  • electrical signals generating means which are Voltage Controlled Current Source, the electrical signals being sinusoidal alternating currents, so as to realize Electrical Impedance Tomography (EIT) with multiple frequencies which are in a frequency band covering the frequencies of the piezo-resistive film, the multiple frequencies being applying simultaneously or successively, the sinusoidal signals generated being a current with a constant amplitude in the flexible film,
  • multiplexing and demultiplexing means connected to electrodes, and configured to select : electrodes for stimulation of the flexible film with sinusoidal signals, and electrodes for measurements the varying voltage in the film at each frequency of the frequency band,

  the microcontroller controlling the electrical signals generating means and the multiplexing and demultiplexing means,

  • storage and computing means connected to the electrodes, and which analyse by multifrequency analysis the material of the given object in contact with the flexible film, by the calculation of the conductivity distribution in the flexible film, at each frequency of the frequency band.

This invention uses the IET technology spectrum in a new way.

Having no priori on the object to be detected, the method uses a frequency band covering quite widely the frequencies used in IET to deduce the material put in contact.

Several simultaneous frequencies of electrical signals are used to characterize the material in contact on the sensor.

This invention makes no assumptions about the type of material that will be in contact and thus makes it possible to describe it.

By giving this modality, robots could behave differently when touching an egg versus touching metal. This invention uses advantageously available and affordable materials.

The invention presented is a tactile surface using a medium composed of a conductive polymer coupled to an Electrical Impedance Tomography process. This device makes it possible to reconstruct, locate and describe the type of touch performed on the sensor. This last feature is distinctive from other tactile systems.

BRIEF DESCRIPTION OF THE DRAWINGS

Other advantages and characteristics of the disclosed devices and methods will become apparent from reading the description, illustrated by the following figures, where:

- Figure 1 represents an experimental set-up of the sensor composed of a Velostat® (flexible film), a Mux/VCCS (electronic unit/ Voltage Controlled Current Source) and a microcontroller;
- Figure 2 represents a schematic of the tactile sensor and information path;
- Figure 3 represents a schematic of a flexible film connected to electrodes and using the IET principle;
- Figure 4 represents a schematic of a flexible film connected to electrodes and a material in contact with the flexible film;
- Figure 5 represents the impedance response of the flexible film as a function of frequency in a graph;
- Figure 6 represents the impedance response of the flexible film for different frequencies for several materials;
- Figure 7 represents a graph showing the categorization of the type of contact on the sensor, using no frequency with a purely constant signal (continuous). It is not possible to distinguish the metal, the plastic and the wood (between abscissa -1 and 0). Only the hand is apart (between abscissa 1 and 2);

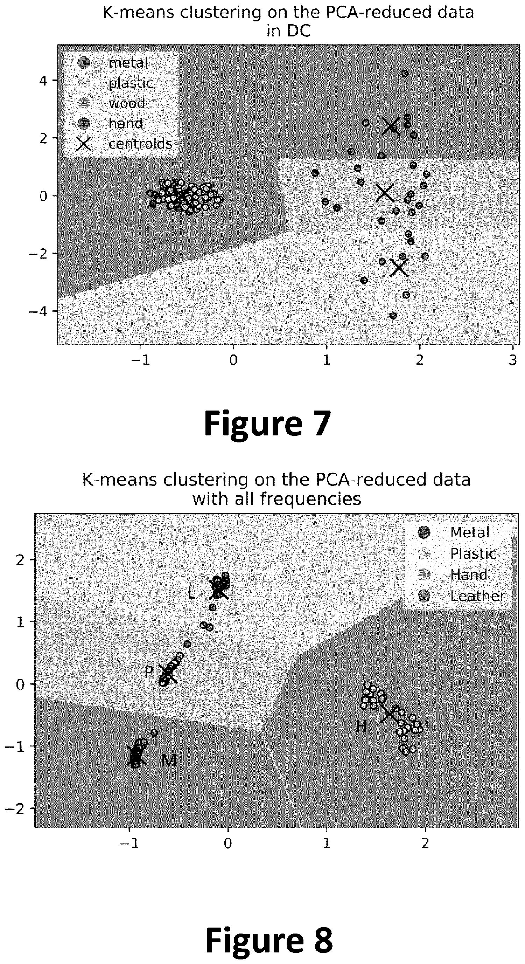

- Figure 8 represents a graph showing the categorization of the type of contact on the sensor, using all frequencies. Depending on the location of the reconstruction, the contact has a certain type. Having a contact at the location of the type therefore tells us its type (hand, metal, plastic or leather). It is possible to distinguish the metal M (between ordinate -0,5 and -1,5 ; between abscissa -1 and -0,5), the plastic P (between ordinate -0,2 and 0,8 ; between abscissa -1 and - 0,5), the leather L (between ordinate 0,8 and 1,8; between abscissa -0,5 and 0,2) and the hand H (between ordinate 0 and -1,8; between abscissa 1 and 2);

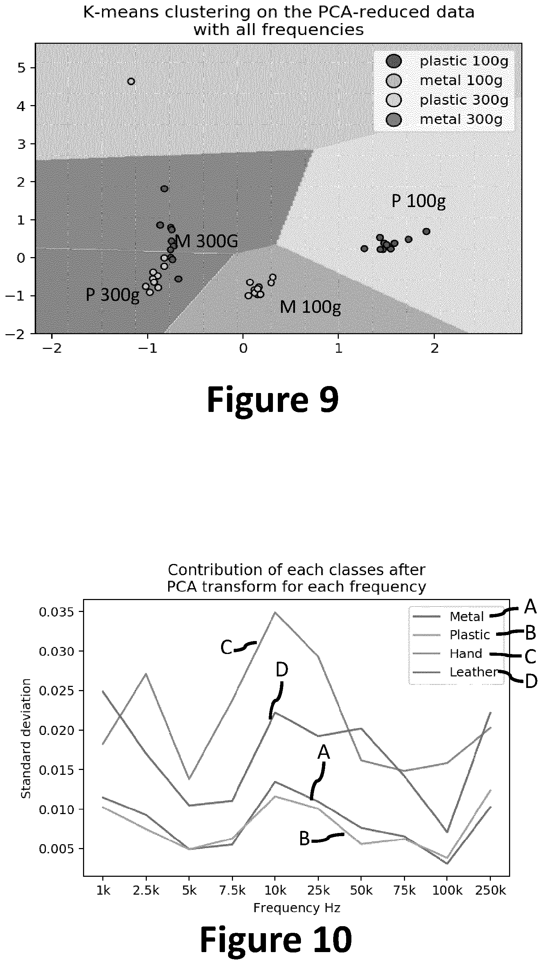

- Figure 9 represents a graph showing the categorization of the type and the pressure of contact on the sensor, using all frequencies. Depending on the location of the reconstruction, the contact has a certain type (metal or plastic) and a certain pressure (100g or 300g). It is possible to distinguish the metal M 300g (between ordinate -1 and 2 ; between abscissa -1 and -0,7), the plastic P 300g (between ordinate -1 and 0 ; between abscissa -1 and -0,8), the metal M 100g (between ordinate -1 and 0; between abscissa 0 and 0,4) and the plastic P 100g (between ordinate 0.11 and 1; between abscissa 1,3 and 2,3);
- Figure 10 represents a graph showing the standard derivation of different material (hand, metal, leather and plastic) as a function of frequency;
- Figure 11 represents the voltage response of each material which permits to determine the conductivity distribution, for a certain frequency band. By using a certain frequency band, some types of materials can be better categorized than others;
- Figure 12 represents the voltage response of plastic and metal for two different pressure (100g and 300g) at 10 kHz;
- Figure 13 represents the voltage response which permits to determine the conductivity distribution in a frequency range of different materials at different pressures. The fact that over a frequency range the different materials as well as the different pressures are differentiable allows us to categorize the type of contact as well as the pressure of the contact;
- Figure 14 represents the response at a frequency of 1 kHz, 10 kHz and 50 kHz of a contact with metal with different pressures ranging from 30 g to 500 g. This difference shows us the quasi-linear character of the pressure versus the voltage (in V) for a particular frequency and for a particular material;
- Figure 15 represents the behavior at a specific frequency of 10 kHz of two materials (plastic and metal) at two different pressures (100 g and 300 g). The different voltages make it possible to categorize both the pressure but also the type of material at the same time;
- Figure 16 represents a bar chart showing the voltage response for different material (metal, plastic, hand, wood, leather, apple) at 10 kHz.

GENERAL DESCRIPTION

The invention relates to a tactile sensor 1 to analyse a given material, with Electrical Impedance Tomography (EIT), comprising:

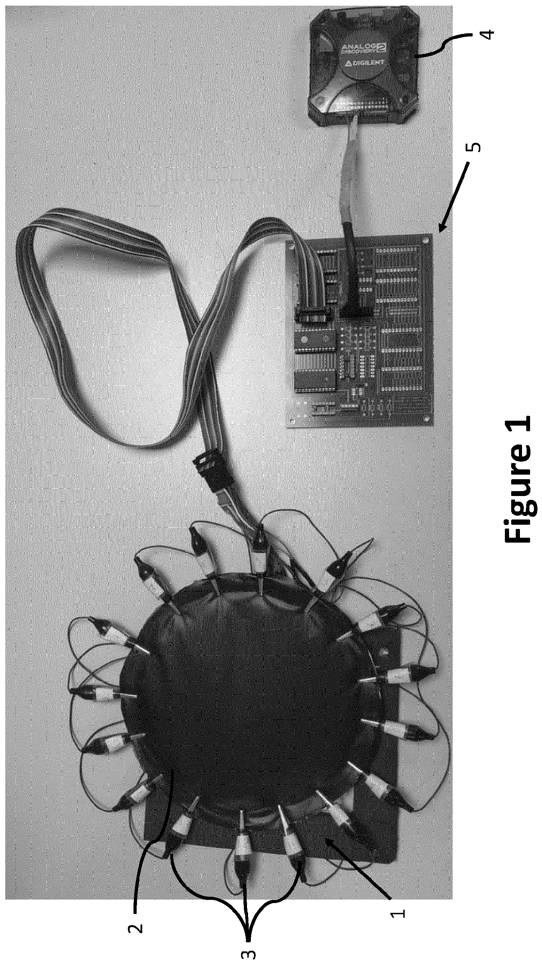

- one flexible film 2 of piezo-resistive material, intended to be in contact with the given material;
- a set of electrodes 3 in contact with the flexible film 2;
- a microcontroller 4;
- an electronic unit 5 connected to the microcontroller 4, as represented on figure 1.

The invention can obtain at least these three data:

- the information of a contact or not on the sensor 1;
- the information of the type of contact;
- the location of the contact.

In order to recognize the given material, the sensor 1 uses multi-frequency analysis (MFA). Each material can be identified by MFA, because each type of material has its own electrical impedance.

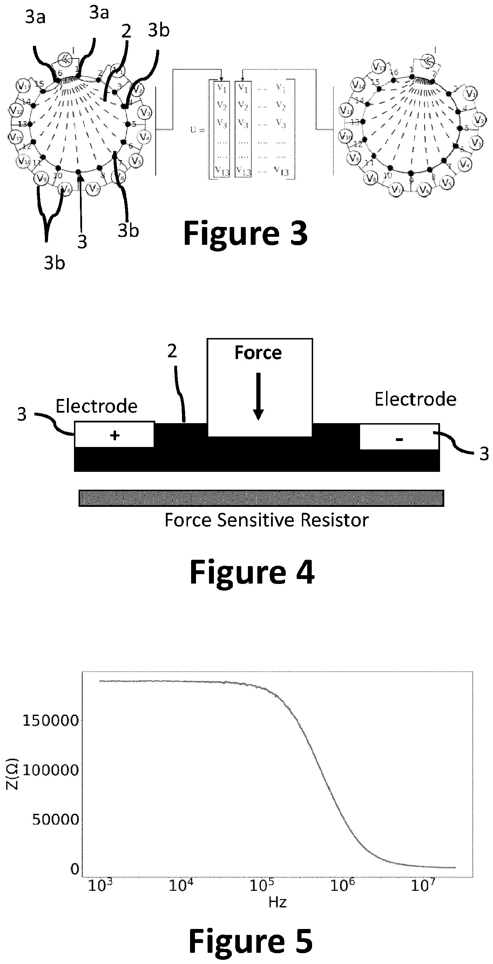

EIT uses the tensions at the edges of the flexible film 2 in order to reconstruct its conductivity distribution, as represented on figure 3. It may be used to show the conductivity of a particular plane (2D) or of an object (3D). For this purpose, the sensor 1 injects a current through the flexible film 2 with electrodes 3.

Advantageously, when a physical contact is made, the location is reconstructed and the type of material is found thanks to the MFA, as represented on figure 4. To proceed the MFA, the sensor 1 can perform for instance a frequency sweep, for instance from one kilohertz to several hundred kilos Hertz for generating sinusoidal signals.

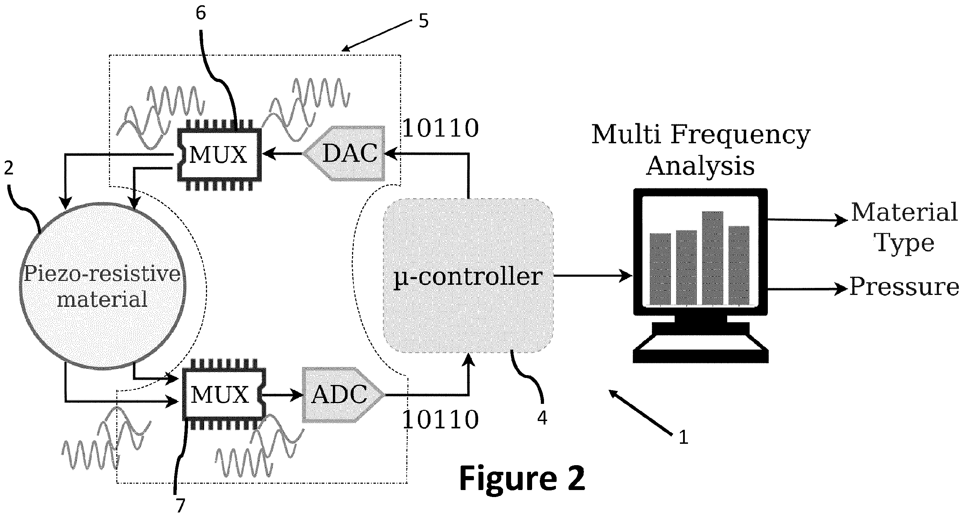

For instance, the electronic unit 5 receives a voltage signal from the microcontroller 4 into a current signal. The current signal then passes through multiplexing 6 and demultiplexing means 7 (present in the electronic unit 5) which distributes the signal to the electrodes 3 (depending on the role of the electrodes 3), so that the frequency can be varied and the response of the material is recovered over the entire surface of the flexible film 2, as represented in figure 2.

The flexible film 2

The flexible film 2 constitutes the touch-sensitive part of the sensor 1 and is a piezo-resistive material. When a material (an object or a person) touches it and deforms it, the internal resistance changes, thus changes its electrical impedance and thus its conductivity distribution, at one position on the flexible film 2 and for one given pressure.

Advantageously, the injected current in the flexible film 2 is controlled and has an intensity inferior to 10 mA. Thus, the intensity and the conductivity of the film 2 are well defined and can be used with EIT.

Advantageously, the resistance of the flexible film 2 is comprised between 15 kOhm/sq cm and 45 kOhm/sq cm.

The flexible film 2 has an impedance of around 150 kΩ between 1 Hz and 100 kHz. Between 100 kHz and 1 MHz, the impedance decreases until reaching around 1 kΩ.

Advantageously, the frequency response of the flexible film 2 is comprised between 1 Hz and 100 kHz. The cut-off frequency is 100 kHz.

The flexible film 2 can also modify the geometry of the sensor 1 (possibility of being able to wind it on any 3D shape) while keeping its properties.

The flexible film 2 of piezo-resistive material can be chosen among:

- velostat®
- eeontex®
- linqstat®
- or other renowned flexible film.

The set of electrodes 3

Advantageously, the electrodes 3, 3a, 3b are placed at equal distance from each other, thus making the measurement homogeneous, along at its periphery, on the edges of the film 2 or within. Moreover, the electrodes 3 can be placed in opposite side by pairs.

In another embodiment, each electrode 3 has its own current injection module.

Advantageously, during an acquisition, two electrodes 3a are used for stimulation, whereas the other electrodes 3b are used in pair for measurements.

The microcontroller 4

The microcontroller 4 can be configured to:

- select a first set two adjacent electrodes 3a for stimulation, whereas the other two adjacent electrodes 3b are selected for measurements, during a first acquisition with several frequencies, then
- repeat with all two adjacent electrodes 3a of the set, selected as electrodes for stimulation, all the other two adjacent electrodes 3b being selected for measurements, and so on during other acquisitions,

each acquisition presenting several frequencies.

Advantageously, it is applied more than two frequencies at each acquisition. Advantageously, the signal generated by the microcontroller 4 is a source voltage. This signal therefore can have a voltage that varies between -1V and 1V sinusoidally at a certain frequency. It does not change amplitude depending on what is connected to it. This signal is converted into current: the signal remains a sinusoidal which this time does not change amplitude into current (and therefore the voltage can change amplitude, while keeping its sinus profile).

The electronic unit 5

The electronic unit 5 manages the signals to be sent to the sensitive part and the communication with a control unit and is connected to the microcontroller 4 and can present:

- communicating means with the microcontroller 4;
- electrical signals generating means;
- multiplexing 6 and demultiplexing means 7 connected to electrodes 3, 3a, 3b;
- storage and computing means connected to the electrodes 3, 3a, 3b.

The electrical signals can be sinusoidal alternating currents, so as to realize Electrical Impedance Tomography (EIT) with multiple frequencies which are in a frequency band covering at least the frequencies of the piezo-resistive film 2.

The multiple frequencies can be applied simultaneously or iteratively, and the sinusoidal signals generated is converted into an equivalent current with a constant amplitude in the flexible film 2.

The electrical signals generating means can be configured:

- to generate iteratively in the two adjacent electrodes 3a for stimulation, sinusoidal alternating currents, each sinusoidal alternating current having one specific frequency, and/or
- to generate in the two adjacent electrodes 3a for stimulation, one sinusoidal alternating current which has multiple frequencies.

The frequency band of the electrical signals is from one kilohertz to several hundred kilos Hertz.

The electrical signals generating means can be a Voltage Controlled Current Source (VCCS).

Advantageously, the multiplexing 6 and demultiplexing means 7 are connected to electrodes 3, and are configured to select: electrodes 3 for stimulation of the flexible film 2 with sinusoidal signals, and electrodes 3 for measurements the varying voltage in the film 2 at each frequency of the frequency band.

The electrical signals generating means and the multiplexing 6 and demultiplexing means 7 can be controlled by the microcontroller 4.

Advantageously, the storage and computing means connected to the electrodes 3analyse by multifrequency analysis the material of the given object in contact with the flexible film 2, by the calculation of the conductivity distribution in the flexible film 2, at each frequency of the frequency band.

The storage and computing means are configured to compute the conductivity distribution in the flexible film 2, at each frequency of the frequency band, for at least two different pressure, at one position on the film 2.

The storage and computing means can analyse by statistical calculation the measured conductivity distribution.

Advantageously, the computing means are configured to process data to a Principal Component Analysis (PCA), to reduce the dimensionality of the data, and the reduced data are given to a K-means in order to retrieve clusters.

The computing means are configured to compute by multifrequency analysis the position and/or the pressure intensity of the contact of the given material on the flexible film 2 of piezo-resistive material.

In another embodiment, the computing means are trained by machine supervised learning from the Electrical Impedance Tomography realized with the same flexible film 2 at multiple frequencies with some training materials among which the given material is, the training materials being in contact with the flexible film 2 at a same pressure and on the same area than the given material.

Statistical and learning methods supervised and unsupervised, for categorization such as deep learning, PCA, kNN, Naive Bayesian Classifier can be used.

The storage and computing means can be configured to determine the spectral profile of the given material.

The storage and computing means can be e.g. a computer, a tablet, a mobile phone.

Advantageously, the data retrieved from EIT can be processed with reconstruction algorithm. However, in order to retrieve the object type, reconstruction is not mandatory. Machine learning algorithms can be used to reconstruct the data from EIT.

Advantageously, the tactile sensor 1 analyses the type of material in contact with the flexible film 2 and compares the results with existing data in the storage means, the tactile sensor deduces the type of material with this data. In another embodiment, when the tactile sensor 1 does not find the nature of the material, the user can record this new data and this new type of material.

For instance, K-means is a clustering algorithm that cluster the data into K clusters. The number of clusters is given beforehand.

$$\sum_{i=0}^{N} \sum_{j=1}^{k} (\|x_i - \mu_j\|^2)$$

It minimises the distance between each sample $x_i$ and the mean of each clusters $\mu_j$. N represents the number of samples and k the number of clusters. The advantages of the K-means are its non-supervised approach and its relatively fast convergence. By using external processing, K-means could also add clusters during learning to handle new categories. Prior to the clustering, a Principal Component Analysis (PCA) could be done. In many cases, this allows better convergence during K-means clustering.

In another embodiment, the sensor comprises calibrating means to normalize the conductivity distribution in regard to the intensity, the position and/or the pressure intensity of the contact of the given material on the flexible film of piezo-resistive material.

The given material can be chosen among this list: metal, plastic, wood, leather, skin (for instance hand wet or dry), other materials: food, biological tissue, paper, fabrics....

The sensor 1 can provide a spectral profile of the given material in contact with the flexible film 2. The spectral profile is compared with the results in memory, which makes it possible to determine the nature of the material.

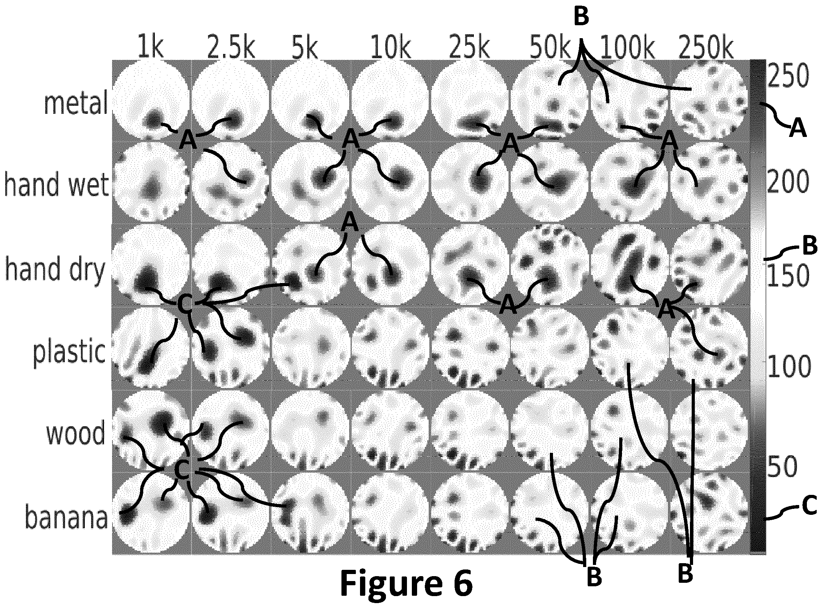

For instance, in figure 6 each material has its own spectral profile as a function of frequency from 1 kHz to 250 kHz. In this figure, the metal has a strong response at a specific point from 1 kHz up to 10 kHz, then above 25 kHz the response weakens and begins to be distributed over several zones.

For "hand wet" and "hand dry" the spectral profiles are very similar: low response at 1 kHz then a strong response of 5 kHz at 250 kHz, "hand wet" starts to react as soon as 2.5 kHz.

For plastic, wood and banana, the profiles are similar: very low response of 1 kHz and 2.5 kHz, then the response partially increases in specific areas.

However, there are differences in intensity between the profiles, for example at 250 kHz, plastic has a strong response concentrated at one point, while wood has a medium response and banana has a strong response but at two different points of the plastic. All profiles have differences, allowing the sensor to differentiate between them.

For instance, in figures 7, 8 and 9 the responses of the materials are distributed in a graph which allows to establish characteristic (specific) zones for each material and which can also vary according to the pressure exerted by the material.

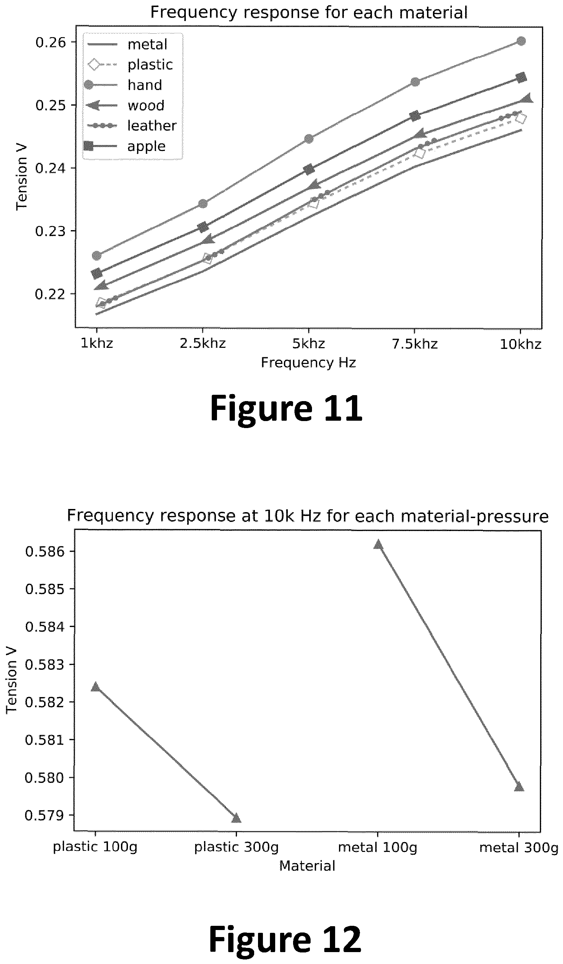

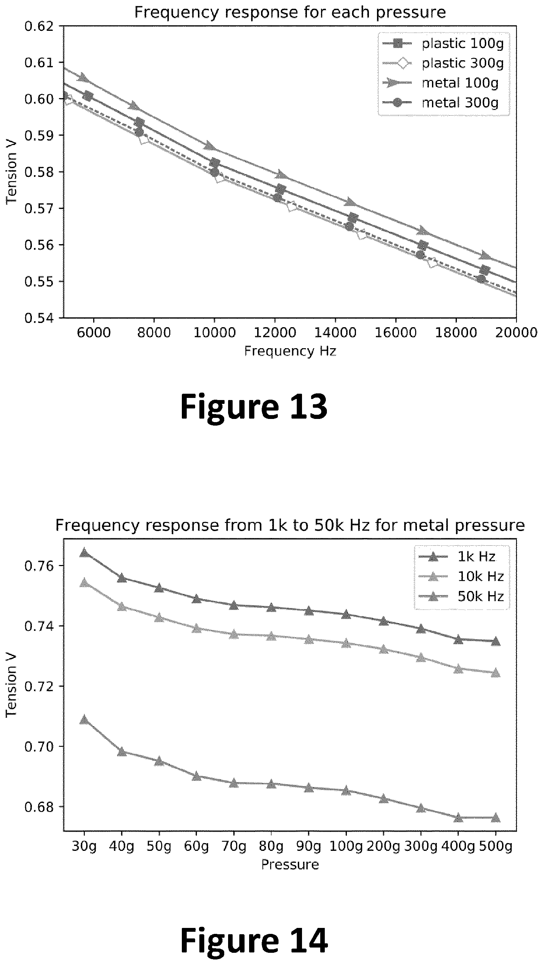

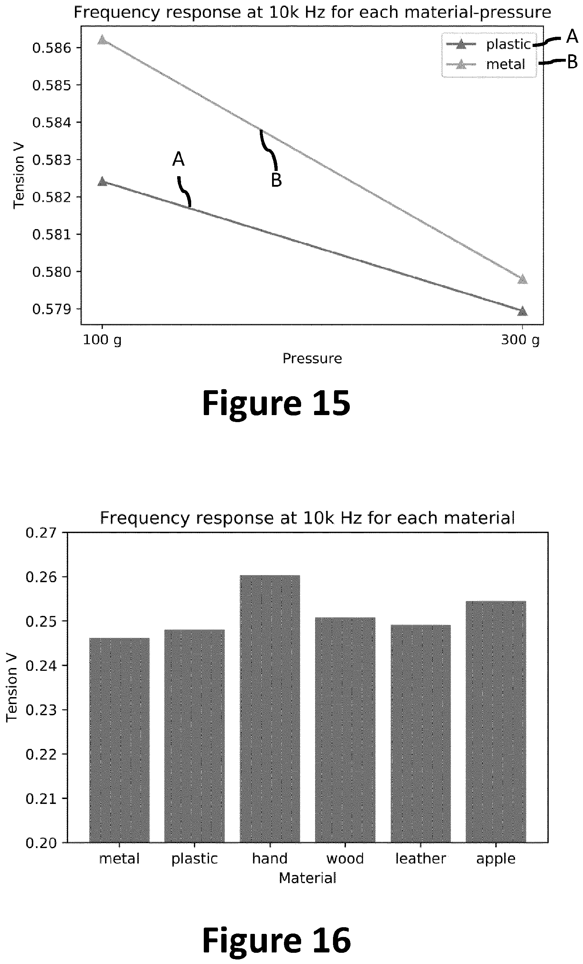

For instance, in figure 10, 11, 12, 13, 14, 15 and 16 each material has its own profile, with its variations, intensities and characteristic peaks that make the difference during a contact. With this data, the sensor is able to identify the type of material, the location of the material but also the pressure exerted by the material during contact with the flexible film 2.

In another embodiment, the tactile sensor 1 can integrate a system. This system can be a robot or a steering wheel, a haptic human-machine interface, prosthetic hands, a biometric detector for safety, wearable sensors for IoT (Internet of Things), physical monitoring, material defect characterization.

**Claims**

1. Tactile sensor (1) to analyse a given material, with Electrical Impedance Tomography (EIT), comprising:

- one flexible film (2) of piezo-resistive material, intended to be in contact with the given material which deforms it and changes its electrical impedance and thus its conductivity distribution, at one position on the film (2) and for one given pressure;
- a set of electrodes (3) in contact with the flexible film (2) along at its periphery, on the edges of the film (2) or within;
- a microcontroller (4);
- an electronic unit (5) connected to the microcontroller (4), and which presents:

    • electrical signals generating means which are Voltage Controlled Current Source, the electrical signals being sinusoidal alternating currents, so as to realize Electrical Impedance Tomography (EIT) with multiple frequencies which are in a frequency band covering the frequencies of the piezo-resistive film (2), the multiple frequencies being applying simultaneously or successively, the sinusoidal signals generated being a current with a constant amplitude in the flexible film (2),
    • multiplexing (6) and demultiplexing means (7) connected to electrodes (3), and configured to select: electrodes (3a) for stimulation of the flexible film (2) with sinusoidal signals, and electrodes (3b) for measurements the varying voltage in the film (2) at each frequency of the frequency band,

the microcontroller (4) controlling the electrical signals generating means and the multiplexing (6) and demultiplexing means (7),

    • storage and computing means connected to the electrodes (3, 3a, 3b), and which analyse by multifrequency analysis the material of the given object in contact with the flexible film (2), by the calculation of the conductivity distribution in the flexible film (2), at each frequency of the frequency band.

2. Tactile sensor (1) according to claim 1, wherein the microcontroller (4) is configured to:

    - select a first set two adjacent electrodes (3a) for stimulation whereas the other two adjacent electrodes (3b) are selected for measurements, during a first acquisition with several frequencies, then
    - repeat with all two adjacent electrodes (3a) of the set selected as electrodes for stimulation, the other two adjacent electrodes (3b) are selected for measurements, during other acquisitions which present each several frequencies.

**3.** Tactile sensor (1) according to claim 2, wherein electrical signals generating means are configured to generate iteratively in the two adjacent electrodes (3a) for stimulation, sinusoidal alternating currents, each sinusoidal alternating current having one specific frequency.

**4.** Tactile sensor (1) according to claims 2-3, wherein electrical signals generating means are configured to generate in the two adjacent electrodes (3a) for stimulation, one sinusoidal alternating current which has multiple frequencies.

**5.** Tactile sensor (1) according to claims 1-4, wherein the frequency band of the electrical signals is from one kilohertz to several hundred kilos Hertz.

**6.** Tactile sensor (1) according to claims 1-5, wherein the storage and computing means are configured to analyse by statistical calculation the measured conductivity distribution.

**7.** Tactile sensor (1) according to claim 6, wherein the computing means are configured to process data with a Principal Component Analysis (PCA), to reduce the dimensionality of the data, and the reduced data are given to a K-means in order to retrieve clusters.

**8.** Tactile sensor according to claims 1-7, wherein the computing means having being trained by machine supervised learning and/or statistical methods for categorization from the Electrical Impedance Tomography realized with the same flexible film (2), at multiple frequencies with some training materials among which the given material is, the training materials being in contact with the flexible film (2) at a same pressure and on the same area than the given material.

**9.** Tactile sensor (1) according to claims 1-8, wherein the electrodes (3) are placed at equal distance from each other thus making the measurement homogeneous.

**10.** Tactile sensor (1) according to claims 1-9, wherein the sensor (1) comprises calibrating means to normalize the conductivity distribution in regard to the intensity, the position and/or the pressure intensity of the contact of the given material on the flexible film (2) of piezo-resistive material.

**11.** Tactile sensor (1) according to claims 1-10, wherein the computing means are configured to compute by multifrequency analysis the position and/or the pressure intensity of the contact of the given material on the flexible film (2) of piezo-resistive material.

**12.** Tactile sensor (1) according to claims 1-11, wherein the storage and computing means are configured to determine the spectral profile of the given material.

**13.** Tactile sensor (1) according to claims 1- 12, wherein the given material is chosen among:

- metal
- plastic
- wood
- leather
- skin, for instance hand wet or dry.

**14.** System having the tactile sensor (1) according to claims 1-13.

**15.** System according to claim 14, wherein the system is a robot, a steering wheel, a haptic human-machine interface, prosthetic hands, a biometric detector for safety, wearable sensors for IoT (Internet of Things), physical monitoring or material defect characterization

Figure 1

**Figure 2**

**Figure 3**

**Figure 4**

**Figure 5**

Figure 6

K-means clustering on the PCA-reduced data in DC

## Figure 7

K-means clustering on the PCA-reduced data with all frequencies

## Figure 8

## K-means clustering on the PCA-reduced data with all frequencies

**Figure 9**

## Contribution of each classes after PCA transform for each frequency

**Figure 10**

Frequency response for each material

Figure 11

Frequency response at 10k Hz for each material-pressure

Figure 12

**Figure 13**

**Figure 14**

Figure 15

Figure 16

Europäisches
Patentamt

European
Patent Office

Office européen
des brevets

# EUROPEAN SEARCH REPORT

Application Number

EP 20 21 4321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ABDELWAHED MEHDI ET AL: "Use of Multi-frequency Electrical Impedance Tomography as Tactile Sensor for Material Discrimination", 2020 5TH INTERNATIONAL CONFERENCE ON ADVANCED ROBOTICS AND MECHATRONICS (ICARM), IEEE, [Online] 18 December 2020 (2020-12-18), pages 588-594, XP033825602, DOI: 10.1109/ICARM49381.2020.9195347 IEEEXPLORE Retrieved from the Internet: URL:https://ieeexplore.ieee.org/document/9195347> [retrieved on 2020-09-14] * the whole document * ----- | 1-15 | INV. G01L1/18 A61B5/0536 B25J13/08 G01L1/20 G01L5/22 |
| L | Mehdi Abdelwahed ET AL: "Use of Multi-frequency Electrical Impedance Tomography as Tactile Sensor for Material Discrimination", IEEE Xplore, 14 September 2020 (2020-09-14), XP055809006, Retrieved from the Internet: URL:https://ieeexplore.ieee.org/document/9195347/metrics#metrics [retrieved on 2021-05-31] * the whole document * ----- | 1-15 | |
| | -/-- | | TECHNICAL FIELDS SEARCHED (IPC) A61B G06F B25J G01L |

The present search report has been drawn up for all claims

| Place of search | Date of completion of the search | Examiner |
|---|---|---|
| The Hague | 31 May 2021 | Stavroulis, Stefanos |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SILVERA-TAWIL DAVID ET AL: "Electrical Impedance Tomography for Artificial Sensitive Robotic Skin: A Review", IEEE SENSORS JOURNAL, IEEE SERVICE CENTER, NEW YORK, NY, US, vol. 15, no. 4, 1 April 2015 (2015-04-01), pages 2001-2016, XP011571516, ISSN: 1530-437X, DOI: 10.1109/JSEN.2014.2375346 [retrieved on 2015-01-27] * abstract * | 1-15 | |
| A | RUSSO STEFANIA ET AL: "Touch Position Detection in Electrical Tomography Tactile Sensors Through Quadratic Classifier", IEEE SENSORS JOURNAL, IEEE SERVICE CENTER, NEW YORK, NY, US, vol. 19, no. 2, 15 January 2019 (2019-01-15), pages 474-483, XP011694694, ISSN: 1530-437X, DOI: 10.1109/JSEN.2018.2878774 [retrieved on 2018-12-20] | 1-15 | |
| | | | TECHNICAL FIELDS SEARCHED (IPC) |

The present search report has been drawn up for all claims

| Place of search | Date of completion of the search | Examiner |
|---|---|---|
| The Hague | 31 May 2021 | Stavroulis, Stefanos |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PUGACH et al.** Brain-Inspired Coding of Robot Body Schema Through Visuo-Motor Integration of Touched Events. *Frontiers in Neurorobotics,* 2019